# EUROPEAN PATENT SPECIFICATION

(11) **EP 4 561 047 B1**
(45) Date of publication and mention of the grant of the patent: **29.07.2026**
(21) Application number: 24211415.5
(22) Date of filing: 07.11.2024
(51) Int. Cl.: H04N 1/00, G06F 3/12, H04W 48/16, H04W 48/20

(54) **IMAGE FORMING APPARATUS**
BILDERZEUGUNGSGERÄT
APPAREIL DE FORMATION D'IMAGES

(30) Priority: 24.11.2023 JP 2023199073
(43) Date of publication of application: 28.05.2025
(73) Proprietor: Brother Kogyo Kabushiki Kaisha, Nagoya, Aichi 467-8561 (JP)
(72) Inventor: HIRASAWA, Yoshi, Nagoya, 467-8562 (JP); IZUMI, Koki, Nagoya, 467-8562 (JP); TAKEUCHI, Shun, Nagoya, 467-8562 (JP); KANEKO, Tomoya, Nagoya, 467-8562 (JP)
(74) Representative: J A Kemp LLP

(56) References cited:
- US-A1- 2016 048 664
- PANTUM: "User Guide Pantum M6200/M6500/M6550 Series Pantum M6600 Series Monochrome Laser MFP", 1 January 2016 (2016-01-01), XP055764873, Retrieved from the Internet <URL:http://global.pantum.com/global/wp-content/uploads/2016/01/Pantum-M6200-M6500-M6550-M6600-MS6000-Series-User-Guide-en-V1-4.pdf> [retrieved on 20210113]

## Description

### BACKGROUND ART

In recent years, with the spread of telework, as disclosed in a related art, an image forming apparatus such as a printer is installed in a space outside a company, and a work using the image forming apparatus is performed in the space outside the company. In a system disclosed in the related art, the image forming apparatus can be used by connecting the image forming apparatus to a LAN in advance, connecting a portable terminal carried by a user to a wireless Wi-Fi access point, and downloading a multipurpose application program from the portable terminal.

In a case where the image forming apparatus is used in the space outside the company, the image forming apparatus may also be connected to a wireless LAN access point. In this case, a wireless LAN access point having a high security is not always installed in the space outside the company. The connection with a wireless LAN access point having a low security poses a risk of information leakage, and thus the connection with such a wireless LAN access point is not preferable. On the other hand, in a case where the connection with the wireless LAN access point is restricted, a convenience of the space outside the company may be impaired. Therefore, there is room for improvement in a technique for connecting the image forming apparatus with the wireless LAN access point.

Document XP055764873 "User Guide Pantum M6200/M6500/M6550 Series Pantum M6600 Series Monochrome Laser MFP" discloses Wi-Fi setup for Pantum printers.

Patent document US2016048664 discloses an apparatus and security method to discover, using the at least one communication interface, an external electronic device available for a communication connection with the apparatus, the discovering including receiving information from the external electronic device, adjust a security level for the apparatus based at least in part on the information, and control at least part of the apparatus using the adjusted security level.

### SUMMARY

An image forming apparatus includes a wireless LAN interface, a user interface, an image forming engine, and a computer. The image forming apparatus is configured to receive an instruction related to image formation. In a case where the instruction related to the image formation is received, the image forming apparatus is configured to cause the image forming engine to form an image. The image forming apparatus is configured to set a connection caution condition. The connection caution condition is a condition indicating a wireless LAN access point that is likely to have a low security. The computer is configured to execute a search processing of searching for connectable wireless LAN access points, a selection processing of receiving a selection of a selectable wireless LAN access points among the wireless LAN access points searched for in the search processing, and a determination processing of determining whether the wireless LAN access point selected in the selection processing satisfies the connection caution condition. In a case where it is determined that the wireless LAN access point selected in the selection processing satisfies the connection caution condition, the computer is further configured to execute a confirmation processing of receiving an operation of selecting whether to permit connection with the wireless LAN access point selected in the selection processing. In a case where an operation of permitting connection is received or in a case where it is determined that the wireless LAN access point selected in the selection processing does not satisfy the connection caution condition, the computer is further configured to execute an establishment processing of establishing connection between the wireless LAN interface and the wireless LAN access point selected in the selection processing.

### BRIEF DESCRIPTION OF DRAWINGS

FIG. 1 is a block diagram illustrating an electrical configuration of an MFP according to the present embodiment.
FIGs. 2A and 2B are diagrams illustrating an example of a use environment of the MFP.
FIG. 3 is a diagram illustrating an example of a connection condition setting screen.
FIG. 4 is a diagram illustrating an example of a selection display setting screen.
FIG. 5 is a flowchart illustrating an example of a procedure of an AP connection processing.
FIG. 6 is a flowchart illustrating an example of a procedure of a display processing.
FIG. 7 is a diagram illustrating an example of a confirmation history information.
FIGs. 8A and 8B are flowcharts illustrating an example of a procedure of a connection processing.
FIG. 9 is a diagram illustrating an example of a confirmation screen.

### DESCRIPTION

Hereinafter, an embodiment embodying an image forming apparatus will be described in detail with reference to the accompanying drawings. The present specification discloses a multifunction peripheral (hereinafter, referred to as an "MFP") having a wireless communication function.

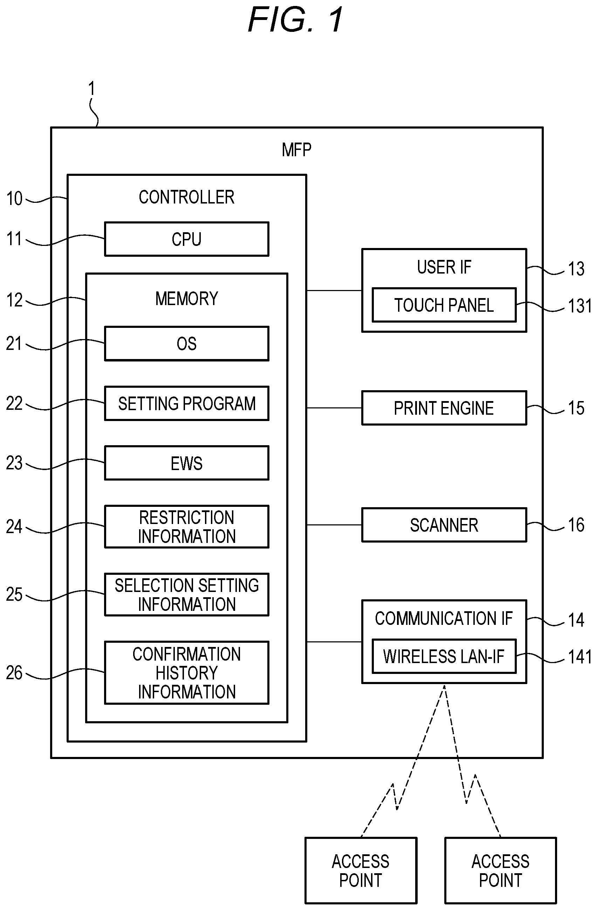

As illustrated in FIG. 1, an MFP 1 according to the present embodiment includes a controller 10 including a CPU 11 and a memory 12. The MFP 1 is an example of the image forming apparatus. The CPU 11 is an example of a computer. The MFP 1 includes a user interface (hereinafter, referred to as a "user IF") 13, a communication interface (hereinafter, referred to as a "communication IF") 14, a print engine 15, and a scanner 16, which are electrically connected to the controller 10. The print engine 15 and the scanner 16 are examples of an image forming engine.

The CPU 11 is configured to execute various types of processing, in accordance with a program read from the memory 12 and based on a user's operation. As illustrated in FIG. 1, the memory 12 is configured to store various programs and various data including an operating system (hereinafter, referred to as an "OS") 21, a setting program 22, a program and data (hereinafter, referred to as an "EWS") 23 for implementing an embedded web server function, restriction information 24, selection setting information 25, and confirmation history information 26 or various types of data. The program and data will be described later in detail.

The memory 12 is used as a work area in a case where various types of processing are executed. A buffer provided in the CPU 11 is also an example of the memory 12. An example of the memory 12 is not limited to a ROM, a RAM, an HDD, and the like incorporated in the MFP 1, and may be a storage medium configured to be read and written by the CPU 11. The computer-readable storage medium is a non-transitory medium. The non-transitory medium also includes a recording medium such as a CD-ROM or a DVD-ROM, in addition to the above-described examples. The non-transitory medium is also a tangible medium. On the other hand, an electric signal carrying a program downloaded from a server or the like on the Internet is a computer-readable signal medium, which is a kind of computer-readable medium, but is not included in the non-transitory computer-readable storage medium.

The user IF 13 includes hardware configured to display a screen for notifying a user of information, and hardware configured to receive an operation from the user. For example, the user IF 13 includes a touch panel 131 having a screen display function and an operation receiving function. The user IF 13 may include a display unit and an operation button.

The communication IF 14 includes hardware for communicating with an external device. For example, the communication IF 14 includes a wireless LAN interface (hereinafter, referred to as a "wireless LAN-IF") 141 having at least a wireless LAN communication function corresponding to a Wi-Fi (registered trademark) standard. The MFP 1 is configured to be connected to a wireless LAN access point (hereinafter, simply referred to as an "access point" or an "AP") having a wireless LAN communication function, via the wireless LAN-IF 141. The communication IF 14 may have a function corresponding to a communication standard such as ETHERNET (registered trademark) or USB. "ETHERNET" is a registered trademark of FUJIFILM Business Innovation Corp.. The MFP 1 may include a plurality of communication IFs 14 corresponding to a plurality of communication standards.

The print engine 15 has a configuration that is configured to print an image based on image data on a print medium such as a sheet. A printing method of the print engine 15 is, for example, an electrophotographic method or an ink jet method. The scanner 16 includes a configuration that is configured to read an image of a document and to acquire image data.

Next, an operation procedure of the MFP 1 will be described with reference to a flowchart. The following processing basically indicates processing of the CPU 11 according to a command written in a program. That is, the processing such as "judgment", "extraction", "selection", "calculation", "determination", "specification", "acquisition", "reception", and "control" to be described below represents the processing of the CPU. The processing by the CPU also includes hardware control using API of the OS. In the present specification, the description of the OS is omitted, and an operation of each program is described. That is, in the following description, the description that "a program B controls hardware C" may refer to "the program B controls the hardware C, using the API of the OS". In addition, the processing of the CPU according to the command written in the program may be described in omitted words. For example, the processing of the CPU may be described as "being performed by the CPU" or the CPU performs". In addition, the processing of the CPU according to the command written in the program may be described in words in which the CPU is omitted, such as "being performed by the program A" or "the program performs".

The term "acquisition" is used as a concept indicating that a request is not essential. That is, processing of receiving data without a request from the CPU is also included in a concept indicating that "the CPU acquires data". In addition, the term "data" in the present specification is represented by a computer-readable bit string. Furthermore, data having substantially the same meaning and different formats are treated as the same data. The same applies to "information" in the present specification. In addition, the term "request" or "instruct" is a concept indicating that information indicating that a request is being made or information indicating that an instruction is being given is output to a partner. In addition, the information indicating that a request is being made or the information indicating that an instruction is being given is simply referred to as a "request" or "instruction".

According to the CPU, processing of determining whether information A indicates that it is a matter B may be conceptually described as "determining whether it is the matter B, based on the information A". According to the CPU, processing of determining whether the information A indicates that it is the matter B or a matter C may be conceptually described as "determining whether it is the matter B or the matter C, based on the information A".

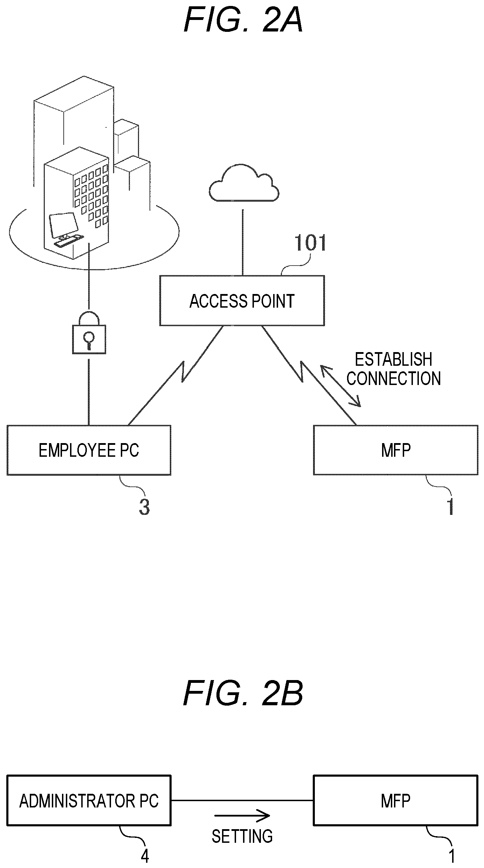

In a case where an employee performs a remote work, for example, as illustrated in FIG. 2A, an employee PC 3, which is a personal computer to be used (hereinafter, referred to as a "PC"), is often set by the user having an administrator authority so as to access information on a company using communication having a high security such as a VPN (abbreviation of Virtual Private Network). In addition, there is a wide variety of highly functional OS or antivirus software available for PCs. The user having an administrator authority can easily take a security measure for the employee PC 3 using the highly functional OS or the antivirus software.

For example, as illustrated in FIG. 2A, the MFP 1 used by the employee who performs a remote work may exchange image data with the employee PC 3 through communication via an access point 101. That is, in a case where the connection between the wireless LAN-IF 141 and the access point 101 is established, the MFP 1 is configured to receive an instruction related to image formation such as a print instruction or a scan instruction from an external device such as the employee PC 3, through wireless LAN communication via the access point 101. In a case where an access point having a low security is used for communication between the MFP 1 and the employee PC 3, there is a risk of information leakage.

Although FIG. 2A illustrates that the employee PC 3 can be directly connected to the company, VPN communication via an access point or a cloud is often used for the connection between the employee PC 3 and the company, in reality. The access point used for the connection between the employee PC 3 and the company may be the access point 101 used for the connection between the MFP 1 and the employee PC 3, or may be an access point different from the access point 101.

However, as compared with the PCs, there are not many security measure methods available for the MFP. In addition, an administrator of the MFP 1 cannot necessarily grasp an environment in which each employee uses the MFP 1, and thus it is difficult to individually designate an access point permitted to establish connection.

For example, as illustrated in of FIG. 2B, the MFP 1 according to the present embodiment is configured to receive, via the communication IF 14, the setting of the access point that is permitted to establish connection, that is, the setting of the restriction information 24 (see FIG. 1), from an administrator PC 4 used by the administrator. For example, the MFP 1 receives the setting by the administrator before being installed in a remote work environment, and is installed in the remote work environment in a state where the setting is complete. The employee who performs a remote work can freely use the MFP 1 within a range of security measures, by using the MFP 1 based on the setting by the administrator.

For example, the administrator can set the restriction information 24, using the EWS 23 provided in the MFP 1. The MFP 1 is configured to receive access to the EWS 23 through, for example, wired connection. In a case where the access to the EWS 23 is received via the communication IF 14, the MFP 1 is configured to provide web page data to an access source device, for example, the administrator PC 4. A browser embedded in the administrator PC 4 is configured to display a web page based on the web page data provided by the MFP 1. The MFP 1 may be in a state where the setting of the access point is not received at the time of factory shipment.

In a case where a screen is displayed based on the web page data received from the MFP 1, the browser embedded in the administrator PC 4 can transmit information indicating an operation received on the screen to the MFP 1. The MFP 1 is configured to acquire authentication information input by the administrator PC 4, based on the information received from the administrator PC 4. In a case where it is determined that the administrator performs login, the MFP 1 provides web page data for displaying a screen for the administrator to the administrator PC 4.

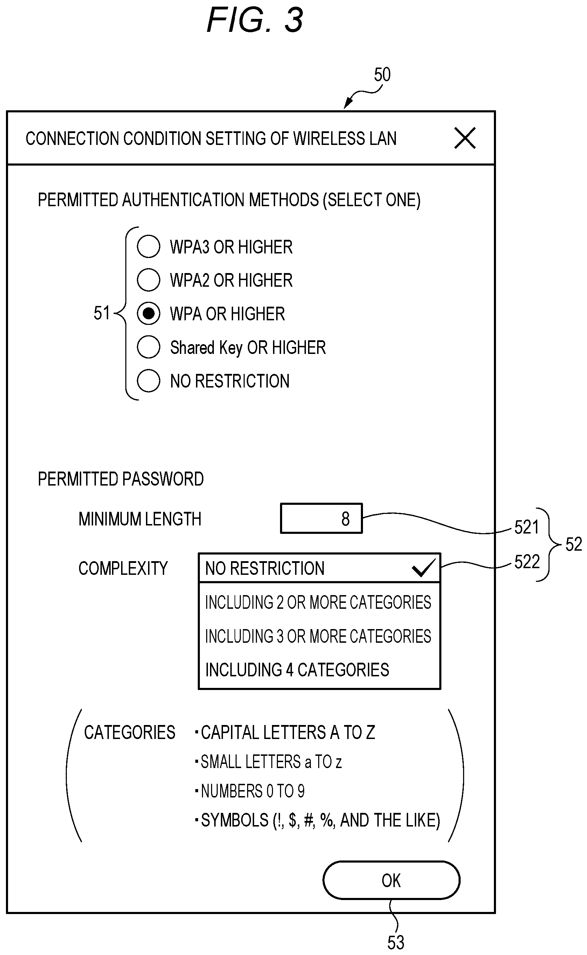

The MFP 1 is configured to receive a setting of conditions related to connection with an access point, via the screen for the administrator. For example, as illustrated in FIG. 3, the MFP 1 is configured to provide the administrator PC 4 with web page data of a connection condition setting screen 50, and to receive a setting of conditions related to an access point permitted to be connected to the MFP 1. The MFP 1 is configured to store, in the memory 12, a condition set by the administrator on the connection condition setting screen 50 as the restriction information 24, and not to receive a change by the user other than the administrator. The condition stored as the restriction information 24 is an example of a connection caution condition. The user who can set the restriction information 24 received via the EWS 23 can be limited to the administrator.

The connection condition setting screen 50 includes, for example, a selection field 51 related to authentication method conditions and a setting field 52 related to a password. In the example of FIG. 3, the selection field 51 related to the authentication method conditions includes radio buttons configured to selectively receive the selection of a minimum level of the permitted authentication method. For example, an option "WPA or higher" means that connection with an access point for which any of the authentication methods "WPA", "WPA2", and "WPA3" is set is also permitted. The authentication method conditions may be such that, instead of selectively receiving the minimum level, various authentication methods are listed and the selection of all authentication methods that permit connection is received.

The condition setting field 52 related to a password includes fields for receiving conditions, that is, a minimum length 521 and a complexity 522. The minimum length 521 is the shortest number of characters enough to permit connection as a password set for the access point. That is, an access point for which a password having a smaller number of characters than a numerical value set in the minimum length 521 is set is an access point restricted to be connected. An access point for which a short password is set is highly likely to have a low security.

The complexity 522 is a condition related to a combination of character types included in a password, for example, the minimum number of categories enough to permit connection. An access point for which a password including character types of categories that are less than the number of categories set in the complexity 522 is set is an access point restricted to be connected. Examples of the category include capital letters in Latin characters, small letters in Latin characters, numbers, and symbols. An access point having few combinations of character types included in a password is highly likely to have a low security.

As options of the complexity 522, in addition to the condition based on the number of categories, there may be a condition for restricting a password that may be easily conceived by anyone or a password that matches a rule indicating a simple configuration, such as prohibiting a password including only words described in a word dictionary that is not suitable for a password, prohibiting a password consist of repeated characters, or prohibiting a password consist of sequential numbers, which are stored in a memory. An access point for which a password that may be easily conceived by anyone or a password having a simple configuration is set is highly likely to have a low security. The MFP 1 may be configured to set a plurality of conditions of the complexity 522 in combination.

For example, in a case where the connection condition setting screen 50 illustrated in FIG. 3 receives information indicating an input operation to an OK button 53 via the EWS 23, the MFP 1 stores, in a nonvolatile storage area of the memory 12, the restriction information 24 (see FIG. 1) including information on an authentication method selected in the selection field 51 and information on password conditions set in the setting field 52.

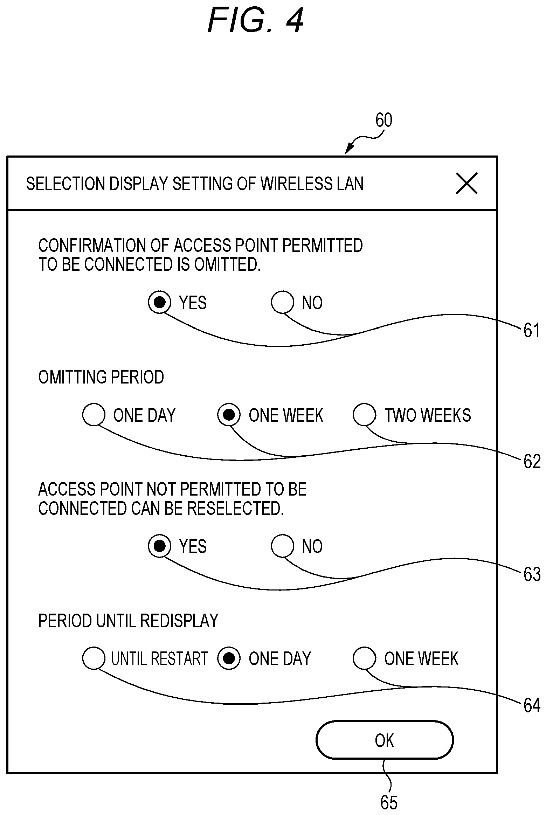

The MFP 1 is further configured to receive the setting of the selection setting information 25 (see FIG. 1) as the setting related to the connection with the access point. For example, in a case where the MFP 1 receives the login with an administrator authority via the EWS 23, for example, as illustrated in FIG. 4, the MFP 1 is configured to display a selection display setting screen 60 that is a screen for receiving the setting of the selection setting information 25. The selection display setting screen 60 may be a part of the connection condition setting screen 50 illustrated in FIG. 3.

As will be described in detail later, the MFP 1 determines whether the access point selected by the user satisfies the stored restriction information 24. Then, in a case where an access point that does not satisfy the restriction information 24 is selected, the MFP 1 confirms with the user whether to establish connection with the access point. That is, in a case where an access point that cannot be determined to permit connection in the determination based on the restriction information 24 is selected, the MFP 1 confirms with the user whether to establish connection with the access point. The access point that does not satisfy the restriction information 24 is highly likely to be an access point having a low security. In a case where a confirmation result of the user indicates that the connection with the access point is established, the MFP 1 establishes the connection. That is, even in a case where the access point is determined to have a low security in the determination based on the restriction information 24, the MFP 1 establishes the connection in a case where the confirmation result of the user indicates that the establishment of the connection with the access point is permitted. In a case where the confirmation result of the user indicates that no establishment of the connection with the access point is permitted, the MFP 1 does not establish the connection.

Further, the MFP 1 is configured to store, in the confirmation history information 26 (see FIG. 1), the confirmation result of the user and use the confirmation result as an index of processing in the subsequent connection instructions. The confirmation history information 26 is information that associates information indicating "permission" or "non-permission", which is the confirmation result of the user, with information indicating the access point. The MFP 1 is configured to store the setting received on the selection display setting screen 60 by the administrator as the selection setting information 25, and to determine a content stored in the confirmation history information 26 based on the selection setting information 25. The details of the confirmation history information 26 will be described later.

The selection display setting screen 60 includes a radio button 61 configured to receive a setting of whether to omit the confirmation again of the access point for which the confirmation result is "permission", and a radio button 62 configured to receive a setting of a period during which the setting in the radio button 61 is enabled.

In addition, the selection display setting screen 60 includes a radio button 63 configured to receive a setting of whether to allow the access point for which the confirmation result is "non-permission" to be reselected, and a radio button 64 configured to receive a setting of a period until the setting in the radio button 63 becomes enabled. In a case where the MFP 1 receives information indicating an input operation to an OK button 65 on the selection display setting screen 60, the MFP 1 stores, in the nonvolatile storage area of the memory 12, the setting received by each of the radio buttons 61 to 64 as the selection setting information 25.

After setting the restriction information 24 and the selection setting information 25, the administrator passes the MFP 1 to the employee who performs a remote work. The employee who performs a remote work uses the MFP 1 in a state where the restriction information 24 and the selection setting information 25 are stored in the MFP 1.

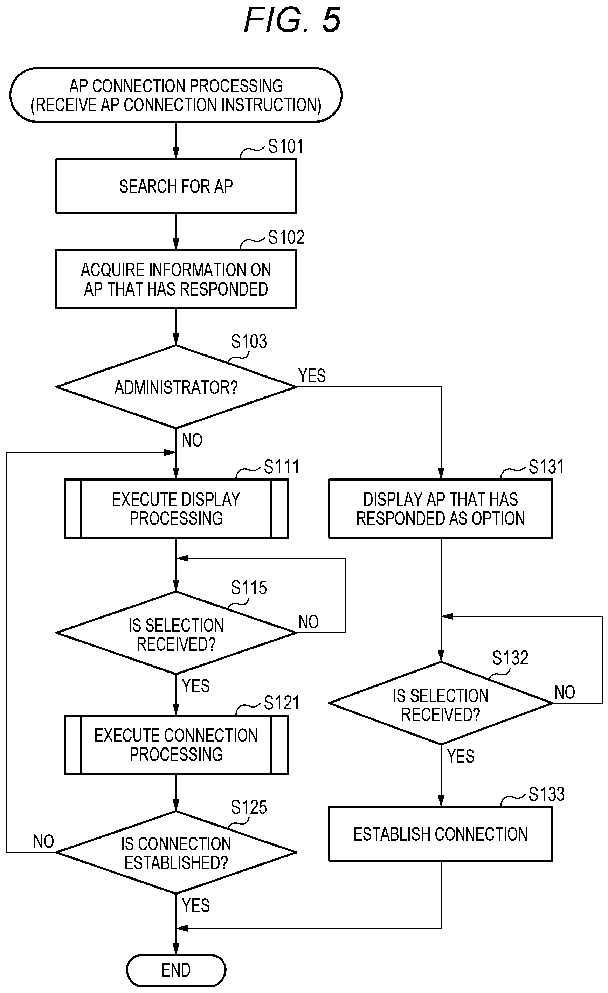

Next, a procedure of an AP connection processing will be described with reference to a flowchart of FIG. 5. The AP connection processing is executed by the CPU 11 of the MFP 1 in response to receiving a connection instruction to establish the connection with the access point to start the wireless LAN communication, in a state where the connection with the access point is not established. The connection instruction is input on the touch panel 131 of the user IF 13 by the employee who performs a remote work, after the MFP 1 is installed in a use environment in which the remote work is performed.

In the AP connection processing, the CPU 11 transmits a search signal for searching for connectable access points, via the wireless LAN-IF 141 (step S101). Step S101 is an example of a search processing. The CPU 11 receives a response signal from the access point according to the search signal, and acquires information on access points, each of which is a transmission source of the response signal (step S102). In a case where each access point receives a search signal, each access point transmits a response signal responding to the received search signal. The search signal is also referred to as a probe signal. In addition, transmitting a signal in a wireless LAN frequency band and searching for access points is also referred to as scanning the wireless LAN frequency band.

Then, the CPU 11 determines whether a login with an administrator authority is received (step S103). The MFP 1 is configured to receive a login instruction via, for example, the touch panel 131 of the user IF 13, before receiving an instruction to establish the connection with the access point. The CPU 11 is configured to determine whether the user has an administrator authority, based on the received login information. For example, in a case where the MFP 1 receives login information indicating an administrator, the CPU 11 determines that the login is from the user who has an administrator authority. The employee who performs a remote work is highly likely to be a user who does not have an administrator authority. The CPU 11 may be configured to receive a connection instruction in a state where no login is received, and in that case, determines that it is not a state where the login with an administrator authority is received.

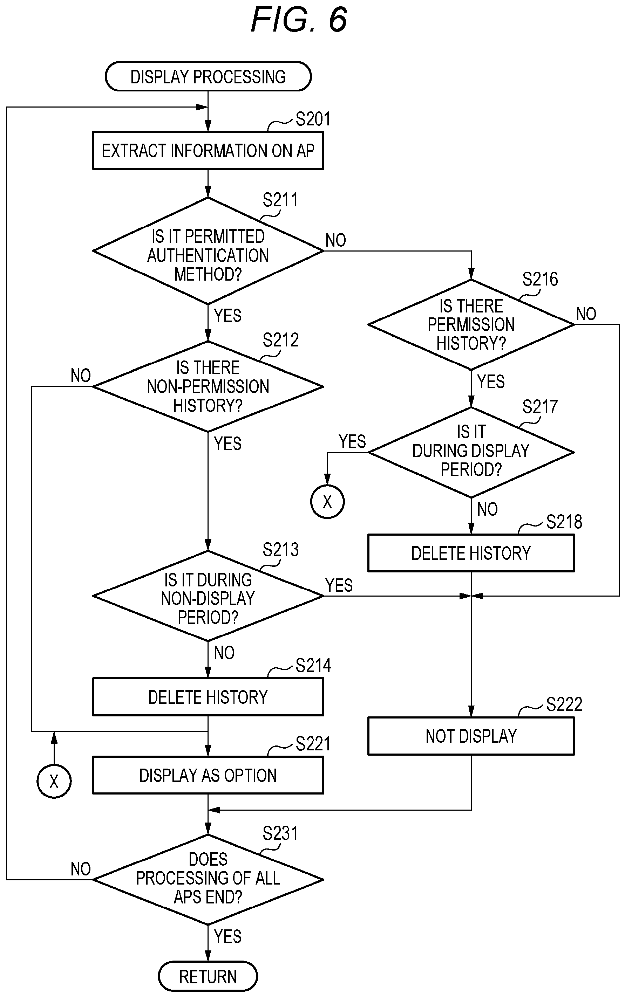

In a case where it is determined that it is not the state where the login with an administrator authority is received (step S103: NO), the CPU 11 executes a display processing (step S111). The display processing is processing of displaying a list of connectable access points as options. A procedure of the display processing will be described with reference to a flowchart of FIG. 6.

In the display processing, the CPU 11 extracts one piece of information on the access points that receive a response signal (step S201), and determines whether an authentication method set for the extracted access point is the authentication method permitted based on the restriction information 24 (step S211). Specifically, the CPU 11 determines whether the authentication method set for the access point is included in the authentication methods received in the selection field 51 of the connection condition setting screen 50 illustrated in FIG. 3. The CPU 11 can acquire information indicating the authentication method from the wireless LAN access point that responds to the search signal of the wireless LAN access point. In addition to the authentication method, the CPU 11 may also acquire identification information, a MAC address of an access point, an encryption method, and the like.

In a case where it is determined that the authentication method is permitted (step S211: YES), the CPU 11 determines whether the confirmation history information 26 (see FIG. 1) stored in the memory 12 stores information indicating "non-permission" in association with the access point (step S212). As described above, the confirmation history information 26 is information indicating that the confirmation result of the user indicates whether the establishment of the connection with the access point is "permission" or "non-permission" on the access point that may be determined to have a low security in the determination based on the restriction information 24. The details of the procedure of confirmation will be described later.

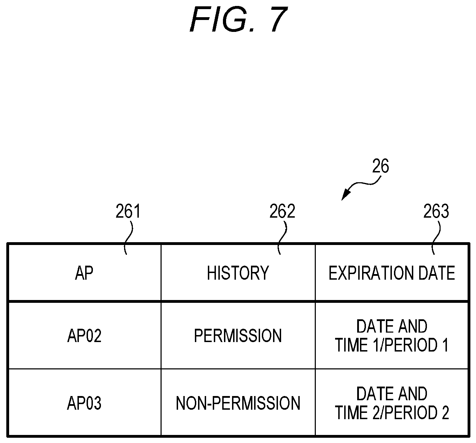

For example, as illustrated in FIG. 7, the confirmation history information 26 includes AP information 261, a history 262, and an expiration date 263. The AP information 261 is identification information for identifying each access point that is determined to have a low security in the determination based on the restriction information 24. The AP information 261 is, for example, a name or SSID of the access point. The history 262 is information indicating whether the confirmation result of the user is "permission" or "non-permission". A record including the history 262 indicating "permission" in the confirmation history information 26 is an example of permission history information. A record including the history 262 indicating "non-permission" in the confirmation history information 26 is an example of non-permission history information. The MFP 1 may be configured to collectively store information including the history indicating "permission" and information including the history indicating "non-permission" as the confirmation history information 26, or may be configured to store the respective information as separate information.

The expiration date 263 is information indicating an expiration date of information indicated by the history 262 of the access point. The record in which the history 262 indicates "permission" stores information indicating a display period as the expiration date 263. The display period is a period during which the access point is permitted to be displayed as an option. The expiration date 263 of the record indicating "permission" is, for example, a combination of information indicating a time point when the record in which the history 262 indicates "permission" is registered and information based on a period corresponding to the radio button 62 selected on the above-described selection display setting screen 60 (see FIG. 4). A record registration procedure will be described later.

The record in which the history 262 indicates "non-permission" stores information indicating a non-display period as the expiration date 263. The non-display period is a period during which the access point is not permitted to be displayed as an option. The expiration date 263 of the record indicating "non-permission" is, for example, a combination of information indicating a time point when the record in which the history 262 indicates "non-permission" is registered and information based on a period corresponding to the radio button 64 selected on the selection display setting screen 60.

In a case where it is determined that the confirmation history information 26 does not store the history 262 indicating "non-permission" in association with the AP information 261 indicating the access point for which the authentication method set is permitted in step S211 (step S212: NO), the CPU 11 displays the information on the access point as an option in a selectable manner (step S221).

On the other hand, in a case where it is determined that the history 262 indicating "non-permission" is stored in association with the AP information 261 indicating the access point (step S212: YES), the CPU 11 determines whether it is during the non-display period of the access point for which the permitted authentication method is set (step S213). The CPU 11 determines whether a current date and time is within a period indicated by the expiration date 263 included in the record of the access point. Specifically, in a case where the current time point is within a period corresponding to the radio button 64 selected on the selection display setting screen 60 from a time point when the history 262 indicating "non-permission" is stored, the CPU 11 determines that it is during the non-display period of the access point.

In a case where it is determined that it is not during a non-display period of a target access point (step S213: NO), the CPU 11 deletes the record indicating the access point from the confirmation history information 26 (step S214). That is, in a case where it is determined that the non-display period ends, the CPU 11 deletes the record indicating the access point from the confirmation history information 26 (step S214). Then, the CPU 11 displays the information on the access point as an option (step S221). The CPU 11 is configured to display the access point in which the information indicating "non-permission" as the history 262 is stored in the confirmation history information 26 as an option in a selectable manner, in a case where the non-display period of the access point ends.

In a case where it is determined that it is during the non-display period of the history 262 (step S213: YES), the CPU 11 does not display the information on the access point extracted in step S201 as an option (step S222). The CPU 11 may display the information on the access point in an unselectable manner. Even in a case where it is determined that the access point for which the permitted authentication method is set, in a case where the information indicating "non-permission" as the history 262 is stored and it is during the non-display period indicated by the expiration date 263 included in the record, the CPU 11 does not display the access point in a selectable manner.

In a case where it is during the non-display period indicated by the expiration date 263 from a time point when the confirmation result of "non-permission" is received and stored in the confirmation history information 26, the CPU 11 does not display the access point in a selectable manner. The setting of whether to store the information indicating "non-permission" as the history 262 in the confirmation history information 26 is received by the radio button 63 of the above-described selection display setting screen 60 (see FIG. 4). The setting of whether to store the information indicating "non-permission" is a setting indicating a condition as to whether to restrict reselection of an access point not permitted to be connected, and is an example of a restriction condition.

On the other hand, in a case where it is determined that the authentication method set for the access point is not the permitted authentication method (step S211: NO), the CPU 11 determines whether the confirmation history information 26 stores the history 262 indicating "permission" in association with the AP information 261 indicating the access point (step S216). In a case where it is determined that the history 262 indicating "permission" is stored (step S216: YES), the CPU 11 determines whether it is during the display period (step S217). That is, the CPU 11 determines whether the current date and time is within a period indicated by the expiration date 263 included in the record of the access point.

In a case where it is determined that it is during the display period of the target access point (step S217: YES), the CPU 11 displays the information on the access point as an option (step S221). Even in a case where the authentication method set for the access point is not the permitted authentication method, the CPU 11 displays the access point as an option in a selectable manner in a case where the information indicating that the access point is permitted to be displayed as the option is stored.

For example, in the determination based on the restriction information 24, in a case where an access point which is a not-permitted authentication method is an access point in which the history 262 indicating "permission" is stored, such as an access point in which the user previously confirms a security and that is "permitted" to be connected, the CPU 11 displays the access point as an option. In a case where "No" is selected in the radio button 61, the history 262 indicating "permission" is not stored. That is, the administrator is configured to permit the user to independently determine the security of the access point to permit the connection or prohibit the connection by selecting the radio button 61.

In a case where it is determined that it is not during the display period of the target access point, that is, the display period ends (step S217: NO), the CPU 11 deletes the record indicating the access point from the confirmation history information 26 (step S218). That is, in a case where it is determined that the display period ends (step S217: NO), the CPU 11 deletes the record indicating the access point from the confirmation history information 26 (step S218). After S218, or in a case where it is determined that the history 262 indicating "permission" is not stored (step S216: NO), the CPU 11 does not display the information on the access point extracted in step S201 as an option (step S222). The CPU 11 may display the information on the access point in an unselectable manner.

After step S221 or step S222, the CPU 11 determines whether the processing for all the access points from which the CPU 11 receives the response signal, has ended (step S231). In a case where it is determined that the processing has not ended (step S231: NO), the CPU 11 proceeds to step S201, extracts another access point, and similarly determines whether to display the access point. In a case where it is determined that the processing for all access points has ended (step S231: YES), the CPU 11 ends the display processing and returns to the AP connection processing.

The information stored as the expiration date 263 is not limited to the combination of the information indicating a time point when the record is registered and the information indicating the selected period. For example, when the record is registered, the CPU 11 may store information indicating a date and time after the period selected on the selection display setting screen 60 elapses from the registration time point, that is, information indicating an end date and time of the display period or the non-display period, as the expiration date 263. In this case, the CPU 11 compares a date and time at a current time point with the date and time stored as the expiration date 263 to determine whether it is during the non-display period or the display period of the access point.

In addition, for example, the CPU 11 may simply store the information indicating the period selected on the selection display setting screen 60 as the expiration date 263. When the record is registered, the CPU 11 may activate a timer in association with information indicating an access point to be registered, and if a period indicated by the timer is within a period stored as the expiration date 263, the CPU 11 may determine that the period is within the expiration date.

Returning to the description of the AP connection processing in FIG. 5. The CPU 11 causes the touch panel 131 to display a selection screen for displaying a list of information of the access points determined to be displayed as options in the display processing, and receives the selection of the user (step S115). Step S115 is an example of a selection processing. In a case where it is determined that the selection of the access point is received (step S115: YES), the CPU 11 executes the connection processing (step S121).

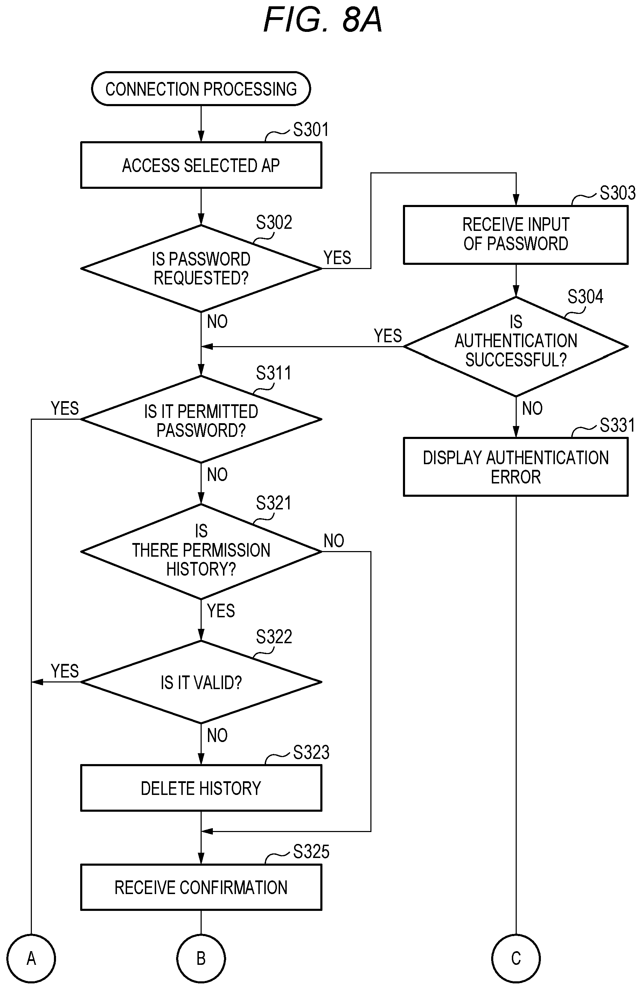

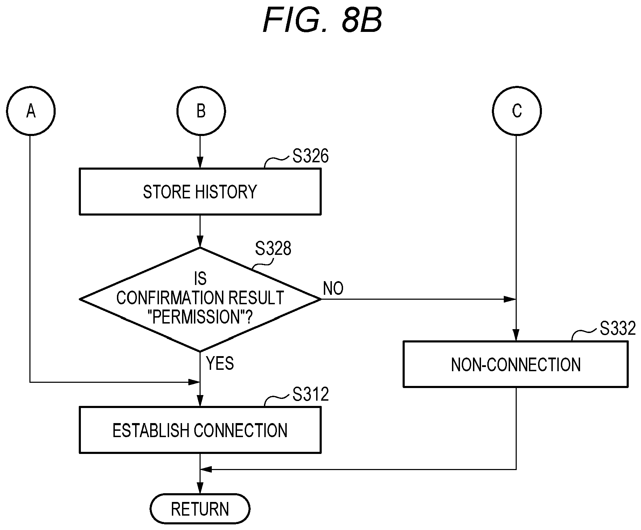

A procedure of the connection processing will be described with reference to a flowcharts of FIGs. 8A and 8B. In the connection processing, the CPU 11 accesses the access point selected by the user in step S115 of the AP connection processing, via the wireless LAN-IF 141 (step S301). Then, the CPU 11 determines whether a password is required to be input to the connection with the access point, that is, whether the access point requires a password (step S302). That is, the CPU 11 determines whether the access point requires a password (step S302). In a case where it is determined that the input of the password is requested (step S302: YES), the CPU 11 causes the touch panel 131 to display a password input screen and receives the input of the password according to a user's operation (step S303).

The CPU 11 requests authentication by transmitting the password received in step S303 to the selected access point, and determines whether the authentication is successful (step S304). In a case where there is a response indicating connection permission from the access point to which the password is transmitted, the CPU 11 determines that the authentication is successful.

In a case where it is determined that the input of the password is not requested (step S302: NO), or in a case where it is determined that the authentication of the password is successful (step S304: YES), the CPU 11 determines, based on the restriction information 24, whether a password setting state for the access point is a state in which the connection is permitted (step S311). Step S311 is an example of a determination processing. The CPU 11 determines whether it is a password used for permitting connection based on the password conditions stored in the restriction information 24. In a case where the input of the password is not requested, the CPU 11 sets a password in which the number of characters and the number of combinations of character types are both 0.

Specifically, first, in a case where the number of characters of the password is shorter than the minimum length condition (for example, the minimum length 521 in FIG. 3) of the password stored in the restriction information 24, the CPU 11 does not determine that the password is permitted. In a case where the password is sufficiently long, the CPU 11 further acquires the number of combinations of character types included in the password. In a case where the number of combinations of character types included in the password is less than the number of combinations of character types received under complexity conditions (for example, the complexity 522 in FIG. 3) of the password stored in the restriction information 24, the CPU 11 does not determine that the password is permitted.

In a case where it is determined that the password set for the access point is a password used for permitting connection (step S311: YES), the CPU 11 transmits a connection request signal to the selected access point to establish the connection (step S312). Step S312 is an example of an establishment processing.

On the other hand, in a case where it is determined that the password is a password not determined to be used for permitting connection (step S311: NO), the CPU 11 determines whether the confirmation history information 26 (see FIG. 7) stored in the memory 12 stores the history 262 indicating "permission" in association with the AP information 261 indicating the currently selected access point (step S321).

In a case where it is determined that the history 262 indicating "permission" is stored in association with the selected access point (step S321: YES), the CPU 11 determines whether the history 262 is valid (step S322). Specifically, the CPU 11 determines whether it is within the expiration date based on the information indicated by the expiration date 263 stored in association with the AP information 261 indicating the selected access point. The expiration date 263 of the record including the history 262 indicating "permission" stores information indicating a time point when the confirmation result of "permission" is received and information indicating the period received by the radio button 62 of the selection display setting screen 60 (see FIG. 4) as described above.

In a case where it is determined that the history 262 is not valid based on the expiration date 263 (step S322: NO), the CPU 11 deletes the record indicating the access point from the confirmation history information 26 (step S323). Then, after step S323, or in a case where it is determined that the record of the AP information 261 indicating the currently selected access point is not stored in the confirmation history information 26 (step S321: NO), the CPU 11 causes the touch panel 131 to display a confirmation screen and receives the confirmation of the user (step S325). Step S325 is an example of a confirmation processing.

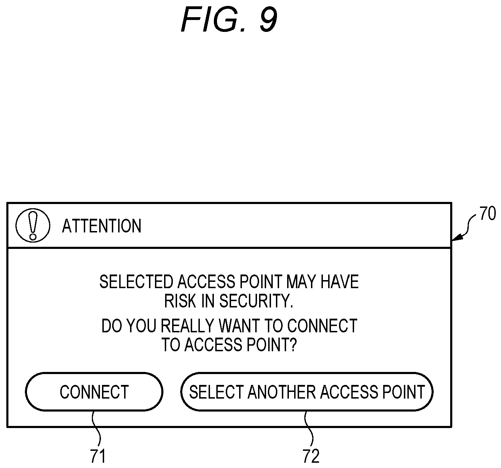

For example, as illustrated in FIG. 9, the confirmation screen 70 is a screen that includes a message notifying that the security of the selected access point is low, and receives the selection of a button 71 for selecting to permit connection with the selected access point and a button 72 for selecting not to permit connection. The CPU 11 is configured to wait until an operation to one of the buttons is received on the displayed confirmation screen 70. The confirmation screen 70 may further include information indicating a reason why the security is low or a handling method such as changing a password.

In a case where any one of the selection is received, the CPU 11 stores a confirmation history based on the selection setting information 25 (see FIG. 1) stored in the memory 12 (step S326). Specifically, in a case where the confirmation result received in step S325 is "permission", which is the operation to the button 71, and the selection setting information 25 stores the fact that the setting of "Yes" by the radio button 61 of the above-described selection display setting screen 60 (see FIG. 4) is received, the CPU 11 creates a record related to the access point and stores the record in the confirmation history information 26. For example, in a case where a confirmation result of an access point "AP02" is "permission", the CPU 11 stores the AP information 261, the history 262 indicating "permission", and the expiration date 263 as information on the access point "AP02" in the confirmation history information 26, as illustrated in FIG. 7.

Then, the CPU 11 determines whether the confirmation result received in step S325 is "permission" (step S328). In a case where it is determined that "permission" is received (step S328: YES), the CPU 11 establishes connection (step S312). Although the security is low depending on a configuration of the password, the CPU 11 displays the confirmation screen 70 to allow the user to confirm whether to permit the connection, and thus an operation is performed in consideration of security.

In a case where it is determined that the confirmation history information 26 already stores the history 262 indicating "permission" in association with the selected access point, and the history 262 is within the expiration date (step S322: YES), the CPU 11 establishes the connection with the access point (step S312). That is, in a case where an access point that may be permitted to establish connection within the expiration date is selected, the CPU 11 establishes the connection as in the case of the permitted password without displaying the confirmation screen 70. The setting as to whether to store the history 262 indicating "permission" received by the radio button 61 of the selection display setting screen 60 is a setting indicating a condition as to whether to omit the receiving of a confirmation operation after the permission is received, and is an example of an omission condition.

It may be troublesome for the user to perform the confirmation operation for permitting connection each time the access point permitted to be connected is to be connected according to a user's operation. The MFP 1 according to the present embodiment can establish connection with the access point that receives permission without requiring the subsequent confirmation operation, which is very convenient for the user.

On the other hand, even in a case where the confirmation result received in step S325 is "permission", in a case where the selection setting information 25 stores the fact that the setting of "No" is received by the radio button 61 of the selection display setting screen 60, the CPU 11 does not store the current confirmation result in the confirmation history information 26. In the case where the setting of "No" is received by the radio button 61 of the selection display setting screen 60, the history 262 indicating "permission" is not stored even for the access point that may be permitted to establish connection, and thus in a case where the access point is selected again, the CPU 11 determines NO in step S321 and displays the confirmation screen 70. Accordingly, the user can normally recognize that the access point is an access point having a low security, and can be expected to use the image forming apparatus in consideration of security, for example, to pay attention to handling when a highly confidential document is printed.

Even in a case where a previous confirmation result is "permission", it may cause a decrease in security by omitting the subsequent confirmation and continuing to use the image forming apparatus. The MFP 1 according to the present embodiment is configured to receive the setting of the administrator for the omission condition indicating whether the confirmation operation is omitted and the period during which the confirmation is omitted, thereby achieving an operation with a higher degree of freedom.

In a case where the confirmation result received in step S325 is "non-permission", and the selection setting information 25 stores the fact that the setting of "Yes" by the radio button 63 of the selection display setting screen 60 is received, the CPU 11 creates a record related to the access point and stores the record in the confirmation history information 26. For example, in a case where a confirmation result of an access point "AP03" is "non-permission", the CPU 11 stores the AP information 261, the history 262 indicating "non-permission", and the expiration date 263 as information on the access point "AP03" in the confirmation history information 26, as illustrated in FIG. 7. As described above, the expiration date 263 is information including information indicating a current date and time and information indicating the period received by the radio button 64 of the selection display setting screen 60. In a case where "until restart" is selected by the radio button 64, the CPU 11 may store information related to the access point in a volatile memory.

In a case where a response signal from the "AP03" on the search signal is received in a state where the history 262 indicating "non-permission" is stored, the CPU 11 determines that there is a non-permission history in step S212 of the display processing (see FIG. 6). Further, in a case where it is during a non-display period of the non-permission history (YES in step S213), the CPU 11 does not display the "AP03" as an option. Therefore, the user cannot select "AP03". That is, the MFP 1 is configured to receive the setting of excluding the access point not permitted to be connected from targets to be selected at the time of selecting the subsequent connection destination. This prevents the access point not permitted to be connected from being displayed multiple times in a selectable manner, which may lead the user to repeatedly select the access point.

In a case where the non-display period has ended, the CPU 11 displays the "AP03" as the option as described above. If the subsequent selection of an access point for which a confirmation result is "non-permission" is continuously restricted, the access point cannot be selected even if the user changes the password and a security thereof is changed. The MFP 1 according to the present embodiment is configured to receive the setting of the administrator by determining whether the access point not permitted to be connected can be selected in the subsequent processing, thereby achieving the operation with a higher degree of freedom. In addition, the non-display period can be provided, and thus it is possible to avoid the access point from being displayed again as an option immediately after the "non-permission" is received, which is very convenient for the user.

On the other hand, in a case where the confirmation result received in step S325 is "non-permission", and the selection setting information 25 stores the fact that the setting of "No" by the radio button 63 of the selection display setting screen 60 is received, the CPU 11 creates a record related to the access point and stores the record in the confirmation history information 26. In this case, the CPU 11 stores the history 262 indicating "non-permission" and the expiration date 263 indicating that no period is defined as the information on the access point "AP03". In this case, the access point for which "non-permission" is selected once is not displayed again as an option.

The CPU 11 may be configured to receive an instruction to change the selection setting information 25 through an operation of the administrator. In a case where the instruction to change the selection setting information 25 is received, the CPU 11 may change the stored confirmation history information 26. It is desirable that the CPU 11 does not receive the instruction to change the selection setting information 25 through an operation other than the administrator.

In a case where it is determined that the input password is not authenticated (step S304: NO), the CPU 11 causes the touch panel 131 to display a message indicating an authentication error (step S331). Then, after step S331, or in a case where it is determined that the confirmation result is non-permission, that is, the operation to the button 72 is received (step S328: NO), the CPU 11 does not establish the connection (step S332). That is, after step S331, or in a case where it is determined that the operation to the button 72 is received (step S328: NO), the CPU 11 does not establish the connection (step S332). After step S312 or step S332, the CPU 11 ends the connection processing and returns to the AP connection processing of FIG. 5.

Returning to the description of the AP connection processing in FIG. 5. The CPU 11 determines whether the connection with the selected access point in the connection processing in step S121 is established (step S125). In a case where it is determined that the connection is established (step S125: YES), the CPU 11 ends the AP connection processing. Accordingly, the MFP 1 is configured to communicate with the external device such as the employee PC 3 (see FIG. 2), by the wireless LAN communication via the access point for which the connection is established. For example, the employee who performs a remote work can use the employee PC 3 to transmit the instruction related to the image formation such as a print instruction or a scan instruction to the MFP 1. The MFP 1 can execute printing using the print engine 15 or scanning using the scanner 16, based on the received instruction.

On the other hand, in a case where it is determined that the connection is not established (step S125: NO), the CPU 11 executes the display processing in step S111 again. In this case, for example, in a case where the non-permission history of the confirmation history information 26 is changed in the connection processing (step S121), the CPU 11 determines the access point to be displayed as the option based on the changed confirmation history information 26. Then, the CPU 11 receives the selection of the user again (step S115), and executes the connection processing (step S121). By returning to the selection of the access point when the access point is not connected, it is possible to reduce the time and effort for selecting and connecting another access point as compared with a case of returning to a home screen or the like.

In a case where it is determined that the login with an administrator authority is received (step S103: YES), the CPU 11 displays, as options, information on all the access points from which the CPU 11 receives a response signal in step S102 (step S131), and receives one selection of the access points (step S132). Further, the CPU 11 receives an input of a password as necessary, establishes connection with the selected access point (step S133), and ends the AP connection processing. That is, in a case where the administrator uses the MFP 1, the MFP 1 is allowed to be connected with all the access points regardless of the restriction information 24.

In a state where the user having an administrator authority is receiving a login, it is assumed that a work is performed while a certain degree of security is secured. Therefore, it is more convenient for the MFP 1 to be able to be connected with the wireless LAN access point in the responsibility of the administrator without confirming whether to permit the connection with the wireless LAN access point, and to be able to freely use the wireless LAN.

As described above in detail, in a case where a wireless LAN access point that is likely to have a low security is selected as a connection destination, the MFP 1 according to the present embodiment confirms whether the connection is possible before being connected with the access point, and is connected with the access point only when the user permits connection. This reduces a possibility that an access point having a low security is connected in a non-dark manner, and reduces a risk of information leakage from the access point. Further, if the user permits the connection, the access point having a low security can perform the wireless LAN communication, and thus a degree of freedom in using the wireless LAN is high, and the image forming apparatus can be operated with a high degree of freedom in consideration of security and convenience.

Display modes of the various screens illustrated in the present embodiment are examples, and the words and the arrangement of the options and the buttons displayed on the respective screens are not limited to the illustrated examples. For example, in a case where the connection is not established in the connection processing, the MFP 1 may end the AP connection processing and return to the home screen.

For example, in the present embodiment, the MFP 1 receives the setting of the restriction information 24 or the like before being installed in the remote work environment, and may receive the setting after being installed in the remote work environment. For example, the MFP 1 may be configured to receive the setting of the restriction information 24 when being installed in the remote work environment and then receiving access from the administrator via a network. In addition, the MFP 1 may be configured to receive the setting of the restriction information 24 before being installed in the remote work environment, or may be configured to receive the change of the restriction information 24, for example, when receiving the access from the administrator via the network.

The MFP 1 receives a setting instruction of the restriction information 24 or a setting instruction of the selection setting information 25 via the EWS 23, and may be configured to receive the setting instruction when a login with an administrator authority is performed via the user IF 13. In addition, the MFP 1 may be configured to receive a login instruction via any one of the EWS 23 and the user IF 13, or may be configured to receive a login instruction via only one of the EWS 23 and the user IF 13. In addition, the MFP 1 may be configured to receive a login instruction not only by an operation on the touch panel 131 but also by an operation on a button provided in the user IF 13, or may be configured to receive a login instruction through near range wireless communication with an IC card or the like in conformity with NFC (abbreviation of Near Field Communication) standard.

The MFP 1 permits all the access points that receive the response signal regardless of the restriction information 24 in a state where the MFP 1 is logged in with the administrator authority, and the present invention is not limited thereto. The MFP 1 may determine the access point to be displayed in a selectable manner, based on the restriction information 24, regardless of whether the MFP 1 is logged in. Specifically, the determination in step S103 of the AP connection processing and steps S131 to S133 may be omitted.

In the embodiment, the CPU 11 determines whether to display the access point as an option based on the authentication method in the display processing (see FIG. 6), and may display all the access points that receive the response signal in a selectable manner. In this case, in step S311 of the connection processing (see FIG. 8A), the CPU 11 may determine whether the selected access point is not only in the password setting state but also has a permitted authentication method. That is, based on the restriction information 24, the CPU 11 may determine that the access point is an access point permitted to be connected in a case where both the authentication method and the password are permitted.

The CPU 11 may determine whether a password is a permitted password before requesting the access point to authenticate the password in the connection processing. That is, the CPU 11 may request the authentication in a case where the password is a permitted password (YES in step S311) or there is a valid permission history (YES in step S321 and YES in step S322).

In addition, in a case where the confirmation result received on the confirmation screen 70 is "permission", the MFP 1 according to the present embodiment stores the information in the confirmation history information 26 and omits the subsequent confirmation, and may not omit the subsequent confirmation. That is, in a case where the security of the selected access point is low, the MFP 1 may display the confirmation screen 70 every time and receive the confirmation of the user. In addition, in a case where the confirmation is received in a state where the login by the user is received, the MFP 1 may store information on the user who receives the login in the confirmation history information 26 and apply the history only to a selection instruction of the access point from the user.

The MFP 1 according to the present embodiment may store the confirmation history information 26 indicating "non-permission" in the volatile memory or a nonvolatile memory. In the case of the volatile memory, it is effective in the processing according to the connection instruction, it is effective only in the selection screen which is returned after an operation of not permitting connection, and in a case where the connection instruction is input again, the confirmation history information 26 is in a state of not being stored, and thus an opportunity of being selectable increases. In the case of the nonvolatile memory, the confirmation history information 26 is stored after the processing according to the connection instruction is finished, and the confirmation history information 26 is in a state of being stored in a case where the connection instruction is input again in addition to the selection screen which is returned after an operation of not permitting connection, and thus an opportunity of being selectable decreases. On the other hand, the confirmation history information 26 indicating "permission" is information used in the subsequent connection instructions, and thus preferably stored in the nonvolatile memory.

In the embodiment, the expiration date 263 of the confirmation history information 26 is selectively received by the radio button 62 or 64 of the selection display setting screen 60, and the present invention is not limited thereto. The term "expiration date" may be a fixed value, may be set by freely inputting, or may not have a deadline.

In any sequence diagram disclosed in the embodiment, an execution order of a plurality of processing in any plurality of steps can be freely changed or can be executed in parallel within a range in which no contradiction occurs in a processing content.

The processing disclosed in the embodiment may be executed by hardware such as a single CPU, a plurality of CPUs, and an ASIC, or a combination thereof. In addition, the processing disclosed in the embodiment can be implemented in various modes such as a recording medium in which a program for executing the processing is recorded, or a method.

## Claims

1. An image forming apparatus comprising:
a wireless LAN interface;
a user interface;
an image forming engine; and
a computer,
wherein the image forming apparatus is configured to:
receive an instruction related to image formation from an external device, through wireless LAN communication via a wireless LAN access point in which a connection with the wireless LAN interface is established; and
in a case where the instruction related to the image formation is received from the external device through the wireless LAN communication, cause the image forming engine to form an image,
the image forming apparatus is configured to set a connection caution condition, in a state where the image forming apparatus is allowed to receive an input by an administrator, the connection caution condition being a condition indicating a wireless LAN access point that is likely to have a low security,
the computer is configured to execute, when receiving a connection instruction for starting the wireless LAN communication:
a search processing of searching for connectable wireless LAN access points;
a selection processing of receiving, via the user interface, a selection of a selectable wireless LAN access points among the wireless LAN access points searched for in the search processing; and
a determination processing of determining whether the wireless LAN access point selected in the selection processing satisfies the connection caution condition;
the computer is further configured to execute:
in a case where it is determined in the determination processing that the wireless LAN access point selected in the selection processing satisfies the connection caution condition, a confirmation processing of receiving, via the user interface, an operation of selecting whether to permit connection with the wireless LAN access point selected in the selection processing; and
in a case where an operation of permitting connection with the wireless LAN access point selected in the selection processing is received in the confirmation processing or in a case where it is determined in the determination processing that the wireless LAN access point selected in the selection processing does not satisfy the connection caution condition, an establishment processing of establishing connection between the wireless LAN interface and the wireless LAN access point selected in the selection processing.

2. The image forming apparatus according to claim 1,
wherein in the case where the operation of permitting connection with the wireless LAN access point selected in the selection processing is received in the confirmation processing, the computer is configured to store, in a memory, permission history information corresponding to the wireless LAN access point selected in the selection processing, and
in processing executed when receiving the connection instruction that is received after the memory stores the permission history information, in a case where it is determined in the determination processing that the wireless LAN access point selected in the selection processing satisfies the connection caution condition, the computer is configured to:
execute the establishment processing without executing the confirmation processing, in a case where the permission history information corresponding to the wireless LAN access point selected in the selection processing is stored in the memory; and
execute the establishment processing in response to receiving the operation of permitting connection in the confirmation processing after executing the confirmation processing, in a case where the permission history information corresponding to the wireless LAN access point selected in the selection processing is not stored in the memory.

3. The image forming apparatus according to claim 2,
wherein the image forming apparatus is configured to set an omission condition for a wireless LAN access point permitted to be connected, in a state where the image forming apparatus is allowed to receive an input by an administrator, the omission condition indicating whether to omit an operation according to the confirmation processing in subsequent processing executed when receiving the connection instruction that is received after the omission condition is set, and
in a case where it is determined in the determination processing that the wireless LAN access point selected in the selection processing satisfies the connection caution condition, the computer is configured to:
in a case where the omission condition indicating that the operation according to the confirmation processing is to be omitted in the subsequent processing is set,
execute the establishment processing without executing the confirmation processing, in a case where the permission history information corresponding to the wireless LAN access point selected in the selection processing is stored in the memory, and
execute the establishment processing in response to receiving the operation of permitting connection in the confirmation processing after executing the confirmation processing, in a case where the permission history information corresponding to the wireless LAN access point selected in the selection processing is not stored in the memory; and
in a case where the omission condition indicating that the operation according to the confirmation processing is not omitted in the subsequent processing is set,
execute the establishment processing in response to receiving the operation of permitting connection in the confirmation processing after executing the confirmation processing, regardless of whether the permission history information corresponding to the wireless LAN access point selected in the selection processing is stored in the memory.

4. The image forming apparatus according to claim 1,
wherein in a case where the wireless LAN access point for which the connection is established according to the connection instruction and it is determined in the determination processing that the connection caution condition is satisfied, the computer is configured to execute the confirmation processing in processing according to the connection instruction received after the connection is established in the processing corresponding to the connection instruction.

5. The image forming apparatus according to claim 1, further comprising:
an embedded web server for functioning the image forming apparatus as a web server,
wherein in a case where the embedded web server is accessed and a user who has an administrator authority logs in the embedded web server, the computer is configured to:
cause the embedded web server to provide an access source with a web page indicating a setting screen on which the connection caution condition is configured to be set, and
receive setting of the connection caution condition via input to the web page.

6. The image forming apparatus according to claim 1,
wherein the connection caution condition includes a condition related to a password for connecting to a wireless LAN access point, and
in the determination processing, it is determined whether the password set for the wireless LAN access point selected in the selection processing satisfies the connection caution condition.

7. The image forming apparatus according to claim 1,
wherein in a case where an operation of not permitting connection is received in the confirmation processing, the computer is configured:
not to execute the establishment processing; and
to execute the selection processing of receiving a selection of one of the selectable wireless LAN access points again.

8. The image forming apparatus according to claim 1,
wherein in a case where an operation of not permitting connection is received in the confirmation processing, the computer is configured to store, in a memory, non-permission history information corresponding to the wireless LAN access point selected in the selection processing, and
in the selection processing after storing the non-permission history information, the computer is configured to receive, via the user interface, a selection of one of the wireless LAN access points among the wireless LAN access points searched for in the search processing excluding a wireless LAN access point to which the non-permission history information corresponding is stored in the memory.

9. The image forming apparatus according to claim 8,
wherein the image forming apparatus is configured to set a restriction condition indicating whether to restrict a reselection, after setting the restriction condition, of a wireless LAN access point not permitted to be connected, in the state where the image forming apparatus is allowed to receive the input by the administrator, and
in the selection processing, the computer is configured to
receive, via the user interface, a selection of one of the wireless LAN access points among the wireless LAN access points searched for in the search processing excluding the wireless LAN access point to which the non-permission history information corresponding is stored in the memory, in a case where the restriction condition indicating that the reselection is to be restricted is set, and
receive, via the user interface, a selection of one of the selectable wireless LAN access points among the wireless LAN access points searched for in the search processing, regardless of whether the wireless LAN access point is the wireless LAN access point to which the non-permission history information corresponding is stored in the memory, in a case where the restriction condition indicating that the subsequent reselection is not restricted is set.

10. The image forming apparatus according to claim 8,
wherein the non-permission history information stored for each wireless LAN access point is associated with an expiration date, and
the computer is configured to receive, via the user interface, a selection of one of the wireless LAN access points among the wireless LAN access points searched for in the search processing excluding the wireless LAN access point to which the non-permission history information corresponding that satisfies the expiration date is stored in the memory.

11. The image forming apparatus according to claim 10,
wherein the image forming apparatus is configured to set a range of the expiration date of the non-permission history information, in a state where the image forming apparatus is allowed to receive the input by the administrator, and
the computer is configured to receive, via the user interface, a selection of one of the wireless LAN access points among the wireless LAN access points searched for in the search processing excluding the wireless LAN access point to which the non-permission history information corresponding that satisfies the expiration date set by the administrator is stored in the memory.

12. The image forming apparatus according to claim 1,
wherein in a state where the image forming apparatus is allowed to receive the input by the administrator, in a case where the image forming apparatus receives the connection instruction and any wireless LAN access point searched for in the search processing is selected, the computer is configured to execute establishment processing of establishing the connection between the wireless LAN interface and the wireless LAN access point selected in the selection processing without executing the confirmation processing, , and
in a state where the image forming apparatus is not allowed to receive the input by the administrator, in a case where the image forming apparatus receives the connection instruction, the computer is configured to execute the establishment processing in response to receiving the operation of permitting connection in the confirmation processing, after the confirmation processing is executed on the wireless LAN access point determined to satisfy the connection caution condition in the determination processing.

## Patentansprüche

1. Bilderzeugungsvorrichtung, umfassend:
eine WLAN-Schnittstelle;
eine Benutzerschnittstelle;
eine Bilderzeugungsmaschine; und
einen Computer,
wobei die Bilderzeugungsvorrichtung konfiguriert ist zum:
Empfangen eines Befehls bezüglich der Bilderzeugung von einer externen Vorrichtung über eine WLAN-Kommunikation über einen WLAN-Zugangspunkt, bei dem eine Verbindung mit der WLAN-Schnittstelle hergestellt ist; und
in einem Fall, in dem der Befehl bezüglich der Bilderzeugung von der externen Vorrichtung über die WLAN-Kommunikation empfangen wird, Bewirken, dass die Bilderzeugungsmaschine ein Bild erzeugt,
wobei die Bilderzeugungsvorrichtung so konfiguriert ist, dass sie in einem Zustand, in dem die Bilderzeugungsvorrichtung eine Eingabe durch einen Administrator empfangen darf, eine Verbindungswarnbedingung festlegt, wobei die Verbindungswarnbedingung eine Bedingung ist, die einen WLAN-Zugangspunkt anzeigt, der wahrscheinlich eine geringe Sicherheit aufweist;
wobei der Computer so konfiguriert ist, dass er beim Empfangen eines Verbindungsbefehls zum Starten der WLAN-Kommunikation Folgendes ausführt:
einen Suchvorgang zum Suchen nach verbindbaren WLAN-Zugangspunkten;
einen Auswahlvorgang zum Empfangen einer Auswahl eines auswählbaren WLAN-Zugangspunkts unter den im Suchvorgang gesuchten WLAN-Zugangspunkten über die Benutzerschnittstelle; und
einen Bestimmungsvorgang zum Bestimmen, ob der im Auswahlvorgang ausgewählte WLAN-Zugangspunkt die Verbindungswarnbedingung erfüllt,
wobei der Computer ferner so konfiguriert ist, dass er Folgendes ausführt:
in einem Fall, in dem im Bestimmungsprozess bestimmt wird, dass der im Auswahlvorgang ausgewählte WLAN-Zugangspunkt die Verbindungswarnbedingung erfüllt, einen Bestätigungsvorgang zum Empfangen über die Benutzerschnittstelle einer Funktion der Auswahl, ob eine Verbindung mit dem im Auswahlvorgang ausgewählten WLAN-Zugangspunkt zugelassen werden soll; und
in einem Fall, in dem im Bestätigungsvorgang eine Funktion zum Zulassen der Verbindung mit dem im Auswahlvorgang ausgewählten WLAN-Zugangspunkt empfangen wird, oder in einem Fall, in dem im Bestimmungsvorgang bestimmt wird, dass der im Auswahlvorgang ausgewählte WLAN-Zugangspunkt die Verbindungswarnbedingung nicht erfüllt, einen Verbindungsaufbauvorgang zum Herstellen einer Verbindung zwischen der WLAN-Schnittstelle und dem im Auswahlvorgang ausgewählten WLAN-Zugangspunkt.

2. Bilderzeugungsvorrichtung nach Anspruch 1,
wobei in dem Fall, in dem die Funktion zum Zulassen der Verbindung mit dem im Auswahlvorgang ausgewählten WLAN-Zugangspunkt im Bestätigungsvorgang empfangen wird, der Computer so konfiguriert ist, dass er in einem Speicher Zulassungsverlaufsinformationen speichert, die dem im Auswahlvorgang ausgewählten WLAN-Zugangspunkt entsprechen, und
bei einem Vorgang, der ausgeführt wird, wenn der Verbindungsbefehl empfangen wird, der nach dem Speichern der Zulassungsverlaufsinformationen im Speicher empfangen wird, in einem Fall, in dem bei dem Bestimmungsvorgang bestimmt wird, dass der im Auswahlvorgang ausgewählte WLAN-Zugangspunkt die Verbindungswarnbedingung erfüllt, der Computer konfiguriert ist zum:
Ausführen des Verbindungsaufbauvorgangs ohne Ausführung des Bestätigungsvorgangs, in einem Fall, in dem die Zulassungsverlaufsinformationen, die dem im Auswahlvorgang ausgewählten WLAN-Zugangspunkt entsprechen, im Speicher gespeichert sind; und
Ausführen des Verbindungsaufbauvorgangs als Reaktion auf den Empfang der Funktion zum Zulassen der Verbindung im Bestätigungsvorgang nach Ausführung des Bestätigungsvorgangs, in einem Fall, in dem die Zulassungsverlaufsinformationen, die dem im Auswahlvorgang ausgewählten WLAN-Zugangspunkt entsprechen, nicht im Speicher gespeichert sind.

3. Bilderzeugungsvorrichtung nach Anspruch 2,
wobei die Bilderzeugungsvorrichtung so konfiguriert ist, dass sie in einem Zustand, in dem die Bilderzeugungsvorrichtung eine Eingabe durch einen Administrator empfangen darf, eine Auslassungsbedingung für einen WLAN-Zugangspunkt festlegt, zu dem eine Verbindung zugelassen ist, wobei die Auslassungsbedingung angibt, ob eine Funktion gemäß dem Bestätigungsvorgang in einem nachfolgenden Vorgang ausgelassen werden soll, der bei Empfang des nach Festlegung der Auslassungsbedingung empfangenen Verbindungsbefehls ausgeführt wird, und
in einem Fall, in dem im Bestimmungsvorgang bestimmt wird, dass der im Auswahlvorgang ausgewählte WLAN-Zugangspunkt die Verbindungswarnbedingung erfüllt, der Computer konfiguriert ist zum:
in einem Fall, in dem die Auslassungsbedingung festgelegt ist, die angibt, dass die Funktion gemäß dem Bestätigungsvorgang im nachfolgenden Vorgang ausgelassen werden soll,
Ausführen des Verbindungsaufbauvorgangs ohne Ausführung des Bestätigungsvorgangs, in einem Fall, in dem die Zulassungsverlaufsinformationen, die dem im Auswahlvorgang ausgewählten WLAN-Zugangspunkt entsprechen, im Speicher gespeichert sind, und
Ausführen des Verbindungsaufbauvorgangs als Reaktion auf den Empfang der Funktion zum Zulassen der Verbindung im Bestätigungsvorgang nach Ausführung des Bestätigungsvorgangs, in einem Fall, in dem die Zulassungsverlaufsinformationen, die dem im Auswahlvorgang ausgewählten WLAN-Zugangspunkt entsprechen, nicht im Speicher gespeichert sind; und
in einem Fall, in dem die Auslassungsbedingung festgelegt ist, die angibt, dass die Funktion gemäß dem Bestätigungsvorgang in dem nachfolgenden Vorgang nicht ausgelassen wird,
Ausführen des Verbindungsaufbauvorgangs als Reaktion auf den Empfang der Funktion zum Zulassen der Verbindung im Bestätigungsvorgang nach Ausführung des Bestätigungsvorgangs, unabhängig davon, ob die Zulassungsverlaufsinformationen, die dem im Auswahlvorgang ausgewählten WLAN-Zugangspunkt entsprechen, im Speicher gespeichert sind.

4. Bilderzeugungsvorrichtung nach Anspruch 1,
wobei in einem Fall, in dem der WLAN-Zugangspunkt, zu dem die Verbindung gemäß dem Verbindungsbefehl hergestellt wird, und in dem im Bestimmungsvorgang bestimmt wird, dass die Verbindungswarnbedingung erfüllt ist, der Computer so konfiguriert ist, dass er den Bestätigungsprozess bei dem Vorgang gemäß dem empfangenen Verbindungsbefehl ausführt, nachdem die Verbindung in dem Vorgang gemäß dem Verbindungsbefehl hergestellt wurde.

5. Bilderzeugungsvorrichtung nach Anspruch 1, ferner umfassend:
einen eingebetteten Webserver, um die Bilderzeugungsvorrichtung als Webserver zu betreiben,
wobei in einem Fall, in dem auf den eingebetteten Webserver zugegriffen wird und sich ein Benutzer mit Administratorrechten beim eingebetteten Webserver anmeldet, der Computer konfiguriert ist zum:
Bewirken, dass der eingebettete Webserver eine Zugriffsquelle mit einer Webseite bereitstellt, die einen Einstellungsbildschirm anzeigt, auf dem die Verbindungswarnbedingung so konfiguriert ist, dass sie festgelegt werden kann, und
Empfangen der Festlegung der Verbindungswarnbedingung über eine Eingabe auf der Webseite.

6. Bilderzeugungsvorrichtung nach Anspruch 1,
wobei die Verbindungswarnbedingung eine Bedingung umfasst, die sich auf ein Passwort für die Verbindung mit einem WLAN-Zugangspunkt bezieht, und
bei dem Bestimmungsvorgang bestimmt wird, ob das für den in dem Auswahlvorgang ausgewählten WLAN-Zugangspunkt festgelegte Passwort die Verbindungswarnbedingung erfüllt.

7. Bilderzeugungsvorrichtung nach Anspruch 1,
wobei in einem Fall, in dem im Bestätigungsvorgang eine Funktion zum Nichtzulassen der Verbindung empfangen wird, der Computer konfiguriert ist zum:
Nichtausführen des Verbindungsaufbauvorgangs; und
Ausführen des Auswahlvorgangs zum erneuten Empfangen einer Auswahl eines der auswählbaren WLAN-Zugangspunkte.

8. Bilderzeugungsvorrichtung nach Anspruch 1,
wobei in einem Fall, in dem im Bestätigungsvorgang eine Funktion zum Nichtzulassen der Verbindung empfangen wird, der Computer so konfiguriert ist, dass er in einem Speicher Informationen zum Verlauf der Nichtzulassungen, die dem im Auswahlvorgang ausgewählten WLAN-Zugangspunkt entsprechen, speichert, und
der Computer im Auswahlvorgang nach dem Speichern der Informationen zum Verlauf der Nichtzulassungen so konfiguriert ist, dass er über die Benutzerschnittstelle eine Auswahl eines der WLAN-Zugangspunkte unter den im Suchvorgang gesuchten WLAN-Zugangspunkten empfängt, wobei ein WLAN-Zugangspunkt ausgeschlossen ist, für den die entsprechenden Informationen zum Verlauf der Nichtzulassungen im Speicher gespeichert sind.

9. Bilderzeugungsvorrichtung nach Anspruch 8,
wobei die Bilderzeugungsvorrichtung so konfiguriert ist, dass sie eine Einschränkungsbedingung festlegt, die angibt, ob eine erneute Auswahl eines WLAN-Zugangspunkts, dessen Verbindung nicht zulässig ist, nach Festlegung der Einschränkungsbedingung eingeschränkt werden soll, und zwar in dem Zustand, in dem die Bilderzeugungsvorrichtung die Eingabe durch den Administrator empfangen darf, und
wobei der Computer im Auswahlvorgang konfiguriert ist zum
Empfangen über die Benutzerschnittstelle einer Auswahl eines der WLAN-Zugangspunkte unter den in dem Suchvorgang gesuchten WLAN-Zugangspunkten, wobei der WLAN-Zugangspunkt ausgeschlossen ist, für den die entsprechenden Informationen zum Verlauf der Nichtzulassungen im Speicher gespeichert sind, in einem Fall, in dem die Einschränkungsbedingung, die angibt, dass die erneute Auswahl eingeschränkt werden soll, festgelegt ist, und
Empfangen einer Auswahl eines der auswählbaren WLAN-Zugangspunkte unter den im Suchvorgang gesuchten WLAN-Zugangspunkten über die Benutzerschnittstelle, unabhängig davon, ob der WLAN-Zugangspunkt der WLAN-Zugangspunkt ist, für den die entsprechenden Informationen zum Verlauf der Nichtzulassungen im Speicher gespeichert sind, in einem Fall, in dem die Einschränkungsbedingung festgelegt ist, die angibt, dass die nachfolgende Neuauswahl nicht eingeschränkt ist.

10. Bilderzeugungsvorrichtung nach Anspruch 8,
wobei die für jeden WLAN-Zugangspunkt gespeicherten Informationen zum Verlauf der Nichtzulassungen einem Ablaufdatum zugeordnet sind, und
der Computer so konfiguriert ist, dass er über die Benutzerschnittstelle eine Auswahl eines der WLAN-Zugangspunkte unter den bei dem Suchvorgang gesuchten WLAN-Zugangspunkten empfängt, wobei der WLAN-Zugangspunkt ausgeschlossen ist, für den die entsprechenden Informationen zum Verlauf der Nichtzulassungen, die das Ablaufdatum erfüllen, im Speicher gespeichert sind.

11. Bilderzeugungsvorrichtung nach Anspruch 10,
wobei die Bilderzeugungsvorrichtung so konfiguriert ist, dass sie einen Bereich für das Ablaufdatum der Informationen zum Verlauf der Nichtzulassungen festlegt, und zwar in einem Zustand, in dem die Bilderzeugungsvorrichtung die Eingabe durch den Administrator empfangen darf, und
der Computer so konfiguriert ist, dass er über die Benutzerschnittstelle eine Auswahl eines der WLAN-Zugangspunkte unter den bei dem Suchvorgang gesuchten WLAN-Zugangspunkten empfängt, wobei der WLAN-Zugangspunkt ausgeschlossen ist, für den die entsprechenden Informationen zum Verlauf der Nichtzulassungen, die das vom Administrator festgelegte Ablaufdatum erfüllen, im Speicher gespeichert sind.

12. Bilderzeugungsvorrichtung nach Anspruch 1,
wobei in einem Zustand, in dem die Bilderzeugungsvorrichtung die Eingabe durch den Administrator empfangen darf, in einem Fall, in dem die Bilderzeugungsvorrichtung den Verbindungsbefehl empfängt und ein beliebiger im Suchvorgang gesuchter WLAN-Zugangspunkt ausgewählt wird, der Computer so konfiguriert ist, dass er einen Verbindungsaufbauvorgang zwischen der WLAN-Schnittstelle und dem im Auswahlvorgang ausgewählten WLAN-Zugangspunkt ausführt, ohne den Bestätigungsvorgang auszuführen, und
in einem Zustand, in dem die Bilderzeugungsvorrichtung die Eingabe durch den Administrator nicht empfangen darf, in einem Fall, in dem die Bilderzeugungsvorrichtung den Verbindungsbefehl empfängt, der Computer so konfiguriert ist, dass er den Verbindungsaufbauvorgang als Reaktion auf den Empfang der Funktion zum Zulassen der Verbindung im Bestätigungsvorgang ausführt, nachdem der Bestätigungsvorgang für den WLAN-Zugangspunkt ausgeführt wurde, von dem im Bestimmungsvorgang bestimmt wurde, dass er die Verbindungswarnbedingung erfüllt.

## Revendications

1. Appareil de formation d'images comprenant :
une interface de réseau local sans fil,
une interface utilisateur,
un moteur de formation d'images, et
un ordinateur ;
l'appareil de formation d'images étant conçu pour :
recevoir une instruction relative à la formation d'images en provenance d'un dispositif extérieur, par communication sur le réseau local sans fil par l'intermédiaire d'un point d'accès au réseau local sans fil grâce auquel une connexion avec l'interface de réseau local sans fil est établie, et
si l'instruction relative à la formation d'images est reçue en provenance du dispositif extérieur par communication sur le réseau local sans fil, amener le moteur de formation d'images à former une image ;
l'appareil de formation d'images étant conçu pour définir une condition de réserve de connexion lorsque l'appareil de formation d'images est autorisé à recevoir une entrée effectuée par un administrateur, la condition de réserve de connexion étant une condition indiquant un point d'accès au réseau local sans fil susceptible de présenter un faible niveau de sécurité ;
l'ordinateur étant conçu pour exécuter, lors de la réception d'une instruction de connexion visant à lancer la communication sur le réseau local sans fil :
un traitement de recherche consistant à rechercher des points d'accès au réseau local sans fil aptes à la connexion,
un traitement de sélection consistant à recevoir, par l'intermédiaire de l'interface utilisateur, la sélection d'un point d'accès au réseau local sans fil sélectionnable parmi les points d'accès au réseau local sans fil recherchés lors du traitement de recherche, et
un traitement de détermination consistant à déterminer si le point d'accès au réseau local sans fil sélectionné lors du traitement de sélection satisfait la condition de réserve de connexion ;
l'ordinateur étant en outre conçu pour exécuter :
s'il est déterminé, lors du traitement de détermination, que le point d'accès au réseau local sans fil sélectionné lors du traitement de sélection satisfait la condition de réserve de connexion, un traitement de confirmation consistant à recevoir, par l'intermédiaire de l'interface utilisateur, une opération de sélection pour autoriser ou non la connexion avec le point d'accès au réseau local sans fil sélectionné lors du traitement de sélection, et
si une opération d'autorisation de connexion avec le point d'accès au réseau local sans fil sélectionné lors du traitement de sélection est reçue lors du traitement de confirmation, ou s'il est déterminé lors du traitement de détermination que le point d'accès au réseau local sans fil sélectionné lors du traitement de sélection ne satisfait pas la condition de réserve de connexion, un traitement d'établissement consistant à établir une connexion entre l'interface de réseau local sans fil et le point d'accès au réseau local sans fil sélectionné lors du traitement de sélection.

2. Appareil de formation d'images selon la revendication 1,
dans lequel, si l'opération d'autorisation de connexion avec le point d'accès au réseau local sans fil sélectionné lors du traitement de sélection est reçue lors du traitement de confirmation, l'ordinateur est conçu pour stocker, dans une mémoire, des informations d'historique d'autorisation correspondant au point d'accès au réseau local sans fil sélectionné lors du traitement de sélection, et
lors du traitement exécuté à la réception de l'instruction de connexion reçue après que la mémoire a enregistré les informations d'historique d'autorisation, s'il est déterminé lors du traitement de détermination que le point d'accès au réseau local sans fil sélectionné lors du traitement de sélection satisfait la condition de réserve de connexion, l'ordinateur est conçu pour :
exécuter le traitement d'établissement sans exécuter le traitement de confirmation, si les informations d'historique d'autorisation correspondant au point d'accès au réseau local sans fil sélectionné lors du traitement de sélection sont stockées dans la mémoire, et
exécuter le traitement d'établissement en réponse à la réception de l'opération d'autorisation de connexion lors du traitement de confirmation après exécution du traitement de confirmation, si les informations d'historique d'autorisation correspondant au point d'accès au réseau local sans fil sélectionné lors du traitement de sélection ne sont pas stockées dans la mémoire.

3. Appareil de formation d'images selon la revendication 2,
ledit appareil de formation d'images étant conçu pour définir une condition d'omission relativement à un point d'accès au réseau local sans fil dont la connexion est autorisée, lorsque l'appareil de formation d'images est autorisé à recevoir une entrée effectuée par un administrateur, la condition d'omission indiquant s'il convient d'omettre une opération selon le traitement de confirmation lors d'un traitement ultérieur exécuté à la réception de l'instruction de connexion, laquelle est reçue après la définition de la condition d'omission, et
s'il est déterminé, lors du traitement de détermination, que le point d'accès au réseau local sans fil sélectionné lors du traitement de sélection satisfait la condition de réserve de connexion, l'ordinateur est conçu pour :
si la condition d'omission indiquant que l'opération selon le traitement de confirmation doit être omise lors du traitement ultérieur est définie :
exécuter le traitement d'établissement sans exécuter le traitement de confirmation, si les informations d'historique d'autorisation correspondant au point d'accès au réseau local sans fil sélectionné lors du traitement de sélection sont stockées dans la mémoire, et
exécuter le traitement d'établissement en réponse à la réception de l'opération d'autorisation de connexion lors du traitement de confirmation après exécution du traitement de confirmation, si les informations d'historique d'autorisation correspondant au point d'accès au réseau local sans fil sélectionné lors du traitement de sélection ne sont pas stockées dans la mémoire, et
si la condition d'omission indiquant que l'opération selon le traitement de confirmation ne doit pas être omise lors du traitement ultérieur est définie :
exécuter le traitement d'établissement en réponse à la réception de l'opération d'autorisation de connexion lors du traitement de confirmation après exécution du traitement de confirmation, indépendamment du fait que les informations d'historique d'autorisation correspondant au point d'accès au réseau local sans fil sélectionné lors du traitement de sélection soient ou non stockées dans la mémoire.

4. Appareil de formation d'images selon la revendication 1,
dans lequel, si le point d'accès au réseau local sans fil pour lequel la connexion est établie selon l'instruction de connexion et s'il est déterminé, lors du traitement de détermination, que la condition de réserve de connexion est satisfaite, l'ordinateur est conçu pour exécuter le traitement de confirmation lors du traitement selon l'instruction de connexion reçue après que la connexion a été établie dans le traitement correspondant à l'instruction de connexion.

5. Appareil de formation d'images selon la revendication 1, comprenant en outre :
un serveur Web intégré permettant à l'appareil de formation d'images de fonctionner comme un serveur Web,
et dans lequel, s'il y a accès au serveur Web intégré et si un utilisateur disposant d'une autorité d'administrateur se connecte au serveur Web intégré, l'ordinateur est conçu pour :
amener le serveur Web intégré à fournir, à une source d'accès, une page Web représentant un écran de configuration sur lequel la condition de réserve de connexion est définie, et
recevoir la définition de la condition de réserve de connexion par l'intermédiaire d'une saisie effectuée sur la page Web.

6. Appareil de formation d'images selon la revendication 1,
dans lequel la condition de réserve de connexion comprend une condition relative à un mot de passe permettant une connexion à un point d'accès au réseau local sans fil, et
lors du traitement de détermination, il est déterminé si le mot de passe défini pour le point d'accès au réseau local sans fil sélectionné lors du traitement de sélection satisfait ou non la condition de réserve de connexion.

7. Appareil de formation d'images selon la revendication 1,
dans lequel, si une opération de non-autorisation de connexion est reçue lors du traitement de confirmation, l'ordinateur est conçu pour :
ne pas exécuter le traitement d'établissement, et
exécuter à nouveau le traitement de sélection consistant à recevoir une sélection d'un des points d'accès au réseau local sans fil sélectionnables.

8. Appareil de formation d'images selon la revendication 1,
dans lequel, si une opération de non-autorisation de connexion est reçue lors du traitement de confirmation, l'ordinateur est conçu pour stocker, dans une mémoire, des informations d'historique de non-autorisation correspondant au point d'accès au réseau local sans fil sélectionné lors du traitement de sélection, et
lors du traitement de sélection après stockage des informations d'historique de non-autorisation, l'ordinateur est conçu pour recevoir, par l'intermédiaire de l'interface utilisateur, une sélection d'un des points d'accès au réseau local sans fil parmi les points d'accès au réseau local sans fil recherchés lors du traitement de recherche, à l'exclusion d'un point d'accès au réseau local sans fil auquel les informations d'historique de non-autorisation correspondantes sont stockées dans la mémoire.

9. Appareil de formation d'images selon la revendication 8,
dans lequel l'appareil de formation d'images est conçu pour définir une condition de restriction indiquant s'il faut restreindre une resélection, après définition de la condition de restriction, d'un point d'accès au réseau local sans fil dont la connexion n'est pas autorisée, lorsque l'appareil de formation d'images est autorisé à recevoir l'entrée effectuée par l'administrateur, et
lors du traitement de sélection, l'ordinateur est conçu pour
recevoir, par l'intermédiaire de l'interface utilisateur, la sélection d'un des points d'accès au réseau local sans fil parmi les points d'accès au réseau local sans fil recherchés lors du traitement de recherche, à l'exclusion du point d'accès au réseau local sans fil auquel les informations d'historique de non-autorisation correspondantes sont stockées dans la mémoire, si la condition de restriction indiquant que la resélection doit être restreinte est définie, et
recevoir, par l'intermédiaire de l'interface utilisateur, la sélection d'un des points d'accès au réseau local sans fil sélectionnables parmi les points d'accès au réseau local sans fil recherchés lors du traitement de recherche, indépendamment du fait que le point d'accès au réseau local sans fil soit ou non le point d'accès au réseau local sans fil auquel les informations d'historique de non-autorisation correspondantes sont stockées dans la mémoire, si la condition de restriction indiquant que la resélection ultérieure n'est pas restreinte est définie.

10. Appareil de formation d'images selon la revendication 8,
dans lequel les informations d'historique de non-autorisation stockées pour chaque point d'accès au réseau local sans fil sont associées à une date d'expiration, et
l'ordinateur est conçu pour recevoir, par l'intermédiaire de l'interface utilisateur, la sélection d'un des points d'accès au réseau local sans fil parmi les points d'accès au réseau local sans fil recherchés lors du traitement de recherche, à l'exclusion du point d'accès au réseau local sans fil auquel les informations d'historique de non-autorisation correspondantes, qui satisfont la date d'expiration, sont stockées dans la mémoire.

11. Appareil de formation d'images selon la revendication 10,
dans lequel l'appareil de formation d'images est conçu pour définir une plage de dates d'expiration des informations d'historique de non-autorisation, lorsque l'appareil de formation d'images est autorisé à recevoir l'entrée effectuée par l'administrateur, et
l'ordinateur est conçu pour recevoir, par l'intermédiaire de l'interface utilisateur, une sélection d'un des points d'accès au réseau local sans fil parmi les points d'accès au réseau local sans fil recherchés lors du traitement de recherche, à l'exclusion du point d'accès au réseau local sans fil auquel les informations d'historique de non-autorisation correspondantes, qui satisfont la date d'expiration définie par l'administrateur, sont stockées dans la mémoire.

12. Appareil de formation d'images selon la revendication 1,
dans lequel, lorsque l'appareil de formation d'images est autorisé à recevoir l'entrée effectuée par l'administrateur, si l'appareil de formation d'images reçoit l'instruction de connexion et que n'importe quel point d'accès au réseau local sans fil recherché lors du traitement de recherche est sélectionné, l'ordinateur est conçu pour exécuter le traitement d'établissement consistant à établir la connexion entre l'interface de réseau local sans fil et le point d'accès au réseau local sans fil sélectionné lors du traitement de sélection sans exécuter le traitement de confirmation, et
lorsque l'appareil de formation d'images n'est pas autorisé à recevoir l'entrée effectuée par l'administrateur, si l'appareil de formation d'images reçoit l'instruction de connexion, l'ordinateur est conçu pour exécuter le traitement d'établissement en réponse à la réception de l'opération autorisant la connexion lors du traitement de confirmation, après que le traitement de confirmation a été exécuté sur le point d'accès au réseau local sans fil déterminé comme satisfaisant la condition de réserve de connexion lors du traitement de détermination.
